# EUROPÄISCHE PATENTSCHRIFT

(11) **EP 2 231 372 B1**
(45) Veröffentlichungstag und Bekanntmachung des Hinweises auf die Patenterteilung: **11.01.2017**
(21) Anmeldenummer: 08870786.4
(22) Anmeldetag: 15.11.2008
(51) Int. Cl.: B27B 5/29, B23D 45/04

(54) **KAPPSÄGE MIT EINER TRANSPORTSICHERUNG**
MITER SAW HAVING TRANSPORT SECURING MEANS
SCIE À ONGLET AVEC UNE SÉCURITÉ POUR LE TRANSPORT

(30) Priorität: 14.01.2008 DE 202008000559 U
(43) Veröffentlichungstag der Anmeldung: 29.09.2010
(73) Patentinhaber: Metabowerke GmbH, 72622 Nürtingen (DE)
(72) Erfinder: VORWERK, Uwe, 49770 Herzlake (DE)
(74) Vertreter: Lorenz, Markus
(86) Internationale Anmeldenummer: PCT/EP2008/009694
(87) Internationale Veröffentlichungsnummer: WO 2009/089862

(56) Entgegenhaltungen:
- EP-A- 0 131 376
- DE-A1- 2 641 666
- DE-A1-102007 011 167
- US-A- 5 778 747
- US-B1- 6 971 297

## Beschreibung

Die Erfindung betrifft eine Kappsäge mit einer Transportsicherung mit den Merkmalen des Oberbegriffs von Anspruch 1.

Kappsägen der in Rede stehenden Art sind seit Jahrzehnten bekannt (EP-A-1 557 231). Sie werden zur Bearbeitung aller Arten von Werkstoffen eingesetzt. Ein besonderes Anwendungsfeld finden Kappsägen bei der Holzbearbeitung. Sie sind aber auch für die Kunststoffbearbeitung und die Metallbearbeitung zu finden.

Eine typische Kappsäge hat ein um eine Querachse schwenkbar angebrachtes Sägeaggregat, dessen Sägeblatt aus einer angehobenen Ruhestellung in eine abgesenkte Sägestellung und umgekehrt schwenkbar ist. Mit dieser Bewegung des Sägeblattes kann ein auf einer Werkstückauflagefläche befindliches Werkstück abgeschnitten - gekappt - werden.

Kappsägen sind aber nicht nur mit um eine Querachse schwenkbar angebrachtem Sägeaggregat bekannt, sondern auch mit einem in Längsrichtung über die Werkstückauflagefläche ziehbaren Sägeaggregat als sogenannte Radialarmsägen.

Die zuvor erläuterte, bekannte Kappsäge vereint die Vorteile einer schwenkbaren Kappsäge mit denen einer Radialarmsäge.

Kappsägen sind überdies meist so ausgestaltet, daß sie auch Gehrungsschnitte ausführen könnten. Einzelheiten dazu ergeben sich aus der zuvor bereits angesprochenen Literaturstelle zum Stand der Technik, auf die hier in vollem Umfange verwiesen wird.

Das Sägeaggregat einer Kappsäge der in Rede stehenden Art ist normalerweise in Richtung der Ruhestellung, also nach oben hin, vorgespannt. Das geschieht meist durch eine Federanordnung, bei älteren Kappsägen auch durch eine Art Gegengewicht. Entgegen dieser Vorspannkraft wird das Sägeaggregat an einem Handgriff zum Ausführen des Sägeschnittes nach unten geschwenkt bis das auf der Werkstückauflagefläche befindliche Werkstück vollständig durchtrennt ist. Dabei tritt ein kleines Teilstück des Sägeblattes des Sägeaggregates randseitig in einen Eintauchschlitz in der Werkstückauflagefläche ein.

Zum Transport der Kappsäge wird aus Platzgründen und Sicherheitsgründen das Sägeaggregat weit nach unten abgesenkt, normalerweise bis in seine Sägestellung oder noch etwas darüber hinaus, so daß der Rand des Sägeblattes tief in den Eintauchschlitz eintritt. In dieser Stellung wird dann eine Transportsicherung aktiviert. Das Sägeaggregat bleibt dann in dieser tiefen Transportstellung an der Halterung verriegelt.

Die bislang bekannte Transportsicherung ist ein parallel zur Querachse im Sägeaggregat verschiebbar angeordneter Stift, der zur Verriegelung des Sägeaggregates an der Halterung in der Transportstellung des Sägeaggregates in ein seitlich ausgerichtetes Loch der Halterung eingesteckt wird und dadurch ein ungewolltes Anheben des Sägeaggregates unter der Vorspannkraft verhindert.

Eine andere aus der Praxis bekannte Transportsicherung ist ein Schwenkbügel, der am von der Halterung entfernten Ende der Werkstückauflagefläche am Träger angeordnet ist und hinter einen Haken am Sägeaggregat geschwenkt werden kann, wenn sich das Sägeaggregat in der Transportstellung befindet.

DE 26 41 666 A1 offenbart eine Kappsäge gemäß dem Oberbegriff des unabhängigen Anspruchs 1.

Den bisherigen Transportsicherungen bei Kappsägen ist gemeinsam, daß sie ergonomisch nicht optimal sind.

Der Lehre liegt daher das Problem zugrunde, die bekannte Kappsäge mit einer ergonomisch optimierten Transportsicherung auszurüsten.

Das zuvor aufgezeigte Problem ist bei der erfindungsgemäßen Kappsäge durch die Merkmale von Anspruch 1 gelöst.

Der erfindungsgemäße, um eine zur Querachse parallele Lagerachse drehbare Nocken ist dank des mit ihm drehfest gekuppelten Betätigungsknaufs sehr einfach bedienbar. Wie eine Art Drehschalter kann man den Betätigungsknauf drehen und so den Nocken entweder in seine Blockierstellung oder in seine Freigabestellung bringen. Dabei wirkt die erfindungsgemäße Transportsicherung wie die aus dem Stand der Technik bekannte Transportsicherung mit Schiebestift zwischen Halterung und Sägeaggregat. Sie stört also nicht vorn an der Werkstückauflagefläche des Trägers. Die Bedienbarkeit des drehbaren Betätigungsknaufs ist aber wesentlich günstiger, angenehmer und intuitiver als das Herumprobieren mit dem bislang verwendeten Schiebestift.

Bevorzugte Ausgestaltungen und Weiterbildungen der Lehre der Erfindung sind Gegenstand der Unteransprüche.

Im folgenden wird die Erfindung anhand einer lediglich ein bevorzugtes Ausführungsbeispiel darstellenden Zeichnung näher erläutert. Im Zuge der Erläuterung des Ausführungsbeispiels werden auch bevorzugte Ausgestaltungen und Weiterbildungen der Lehre im einzelnen beschrieben. In der Zeichnung zeigt
- Fig. 1: in einer Seitenansicht, einige Teile der Kappsäge weggelassen, ein Ausführungsbeispiel einer Kappsäge,
- Fig. 2: in einer Fig. 1 entsprechenden Seitenansicht, jedoch den Träger weggelassen, das Sägeaggregat der erfindungsgemäßen Kappsäge in Ruhestellung,
- Fig. 3: in einer Fig. 2 entsprechenden Darstellung das Sägeaggregat der erfindungsgemäßen Kappsäge bei der Schwenkbewegung in Richtung der Sägestellung,
- Fig. 4: das Sägeaggregat der Kappsäge aus Fig. 1 vollständig abgesenkt in der Sägestellung, die hier gleichzeitig die Transportstellung ist,
- Fig. 5: das Sägeaggregat aus Fig. 4, von der gegenüberliegenden Seite dargestellt, so daß der Betätigungsknauf der Transportsicherung erkennbar ist.

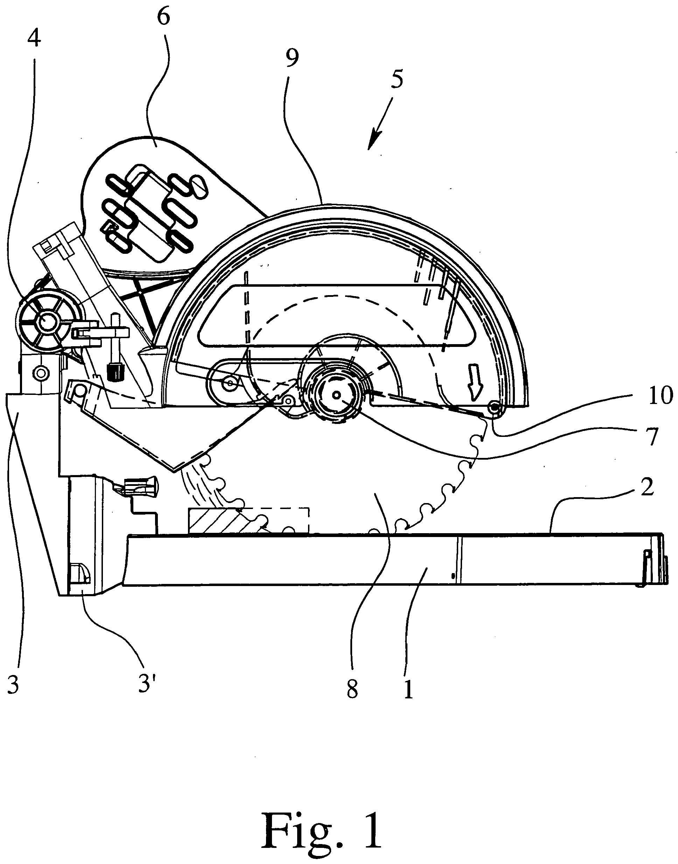

Die in Fig. 1 dargestellte Kappsäge zeigt nur die für die Erläuterung der Erfindung wesentlichen Teile. Nicht erkennbar sind Unterbau und von Fig. 1 ausgehend weiter links liegende Teile, beispielsweise eine Zugstangenführung. Dargestellt in Fig. 1 ist eine Kappsäge mit einem Träger 1, der eine Werkstückauflage 2 bildet. Schraffiert auf der Werkstückauflagefläche 2 erkennt man hier ein Werkstück, beispielsweise eine Holzleiste. Am Träger 1 ist eine Halterung 3 angebracht, die rückwärtig hinter der Werkstückauflagefläche 2 liegt. Diese ist schematisch angedeutet. Das dargestellte Ausführungsbeispiel zeigt an der Halterung 3 eine Neigungsverstellung 3', so daß mit dieser Kappsäge auch Gehrungsschnitte ausgeführt werden können. Auf die Beschreibungseinleitung und die dort genannte Literaturstelle, in der die Umstände bei Kappsägen ausführlich beschrieben werden, darf an dieser Stelle hingewiesen werden.

An der Halterung 3 oberhalb des Trägers 1 angebracht ist ein Sägeaggregat 5. Dieses ist im dargestellten und bevorzugten Ausführungsbeispiel um eine Querachse 4 schwenkbar und befindet sich oberhalb der Werkstückauflagefläche 2. Bei einer Kapp- und Zugsäge kann das Sägeaggregat 5 an bei der Darstellung gemäß Fig. 1 von links nach rechts verlaufenden Zugstangen, die von der Halterung 3 auslegerartig über die Werkstückauflagefläche 2 ragen, radial gezogen werden, so daß der Sägeschnitt länger wird.

Bei der dargestellten Kappsäge wird das Sägeaggregat 5 um die Querachse 4 aus einer angehobenen Ruhestellung, die in Fig. 1 nicht gezeigt ist, in eine abgesenkte Sägestellung, die in Fig. 1 gezeigt ist, und umgekehrt geschwenkt.

### Das Sägeaggregat 5 weist hier auf

- einen Antriebsmotor 6,
- ein vom Antriebsmotor 6 angetriebenes, auf einer Welle 7 gelagertes Sägeblatt 8,
- eine das Sägeblatt 8 von oben her etwa über die Hälfte abdeckende feststehende Schutzhaube 9,
- eine Pendelschutzhaube 10, die in Ruhestellung den unteren, in Fig. 1 frei liegenden Teil des Zahnkranzes des Sägeblattes 8 abdeckt.

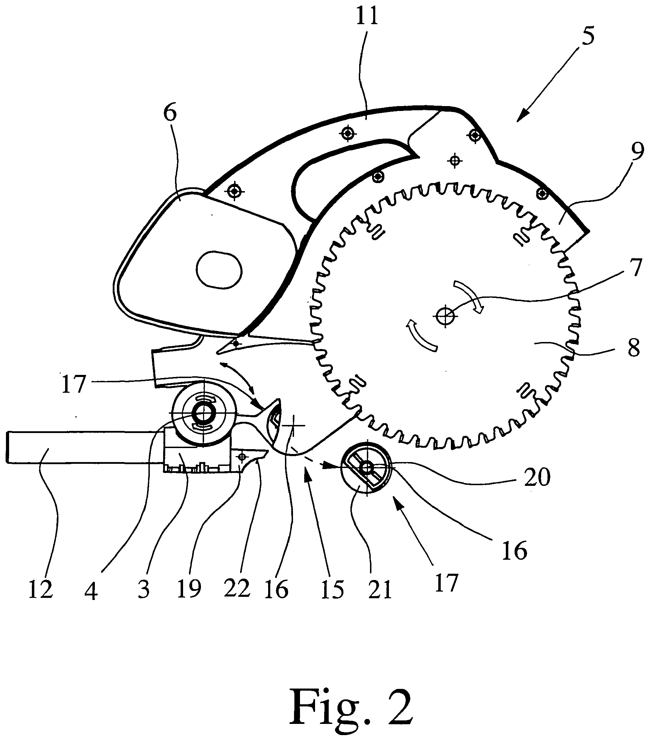

Fig. 2 bis Fig. 5 zeigen nun die erfindungsgemäß ausgestaltete Kappsäge. An dieser sieht man zunächst einen Tragegriff 11, der auch gleichzeitig als Handgriff zum Betätigen des Sägeaggregates 5 genutzt werden kann. Meist gibt es aber noch einen in Fig. 2 bis 5 nicht dargestellten, senkrecht zur Zeichenebene ausgerichteten Betätigungsgriff.

Bei der Darstellung des Sägeaggregates 5 der erfindungsgemäßen Kappsäge in Fig. 2 bis 5 ist die Pendelschutzhaube 10 weggelassen worden. Außerdem sind einige Bereiche des Sägeaggregates 5 zum Zwecke besserer Darstellbarkeit geöffnet worden.

In Fig. 2 sieht man die Halterung 3 und links von der Halterung 3 Zugstangen 12, die bereits oben erwähnt worden sind. An der Halterung 3 befindet sich eine Transportsicherung 15. Man erkennt unterhalb des Sägeblattes 8 herausgezeichnet einen um eine zur Querachse 4 parallele Lagerachse 16 drehbaren Nocken 17. Am Sägeaggregat 5 ist die Lagerachse 16 ebenfalls angedeutet, dort ist der Nocken 17 teilweise verdeckt.

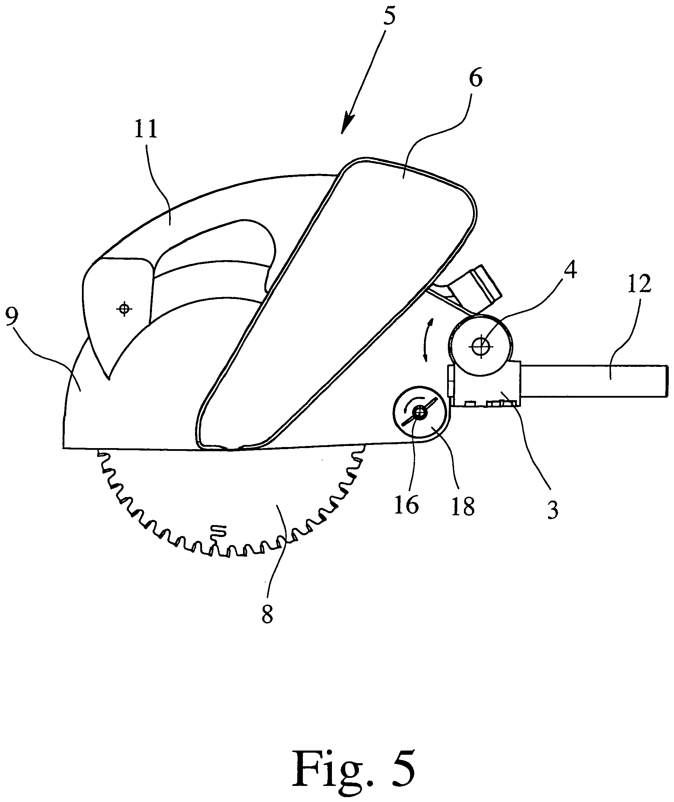

Fig. 5 zeigt das Sägeaggregat 5 der Kappsäge von der Rückseite her. Man erkennt dort einen Betätigungsknauf 18 der mit dem Nocken 17 drehfest gekuppelt ist.

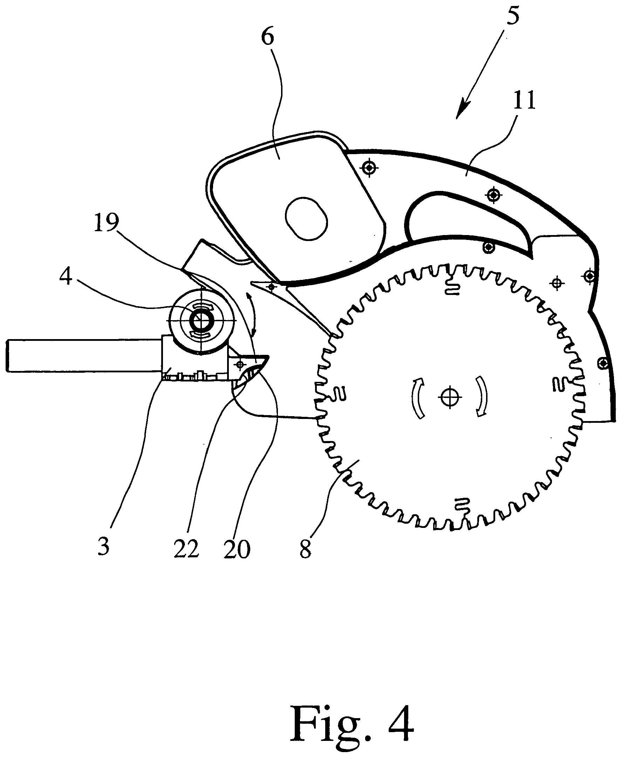

In Fig. 2 erkennt man ferner eine Blockiernase 19. Dabei zeigt der Vergleich von Fig. 2 und Fig. 4, daß in Transportstellung (Fig. 4) der Nocken 17 mit der Blokkiernase 19 blockierend in Eingriff bringbar ist. Das ist die Blockierstellung des Nockens 17. In der in Fig. 4 dargestellten Position ist das Sägeaggregat 5 in seiner Transportstellung durch die Transportsicherung 15 verriegelt. Es kann sich nicht unter Wirkung der Vorspannkraft nach oben in die Ruhestellung bewegen. Vielmehr kann man die gesamte Kappsäge in dieser Stellung des Sägeaggregates 5 bequem am Tragegriff 11 tragen. Der Tragegriff 11 ist so angeordnet, daß er ein bequemes Tragen der Kappsäge in Höhe ihres Schwerpunktes erlaubt.

Grundsätzlich können Nocken 17 und Blockiernase 19 jedem der beiden beteiligten Elemente der Kappsäge, also Halterung 3 oder Sägeaggregat 5, zugeordnet sein. Ergonomisch hat es sich als besonders praktisch erwiesen, daß, wie im dargestellten Ausführungsbeispiel gezeigt, die Blockiernase 19 an der Halterung 3 angeordnet ist, während der Nocken 17 am Sägeaggregat 5 angeordnet ist.

Das in Fig. 2 dargestellte Ausführungsbeispiel zeigt, daß nach besonders bevorzugter Lehre der Nocken 17 eine kreisförmige Kontur 20 mit einer hier und vorzugsweise kreisabschnittförmigen Ausnehmung 21 aufweist. Im dargestellten Ausführungsbeispiel ist also der Nocken 17 einseitig abgeflacht. Durch diese Abflachung kann der Nocken 17 gegenüber der Blockiernase 19 in eine solche Stellung gebracht werden, daß der Nocken 17 an der Blockiernase 19 beim Schwenken des Sägeaggregates 5 einfach vorbeigeschwenkt wird. Das ist eine Freigabestellung des Nockens 17.

In einer anderen Stellung des Nockens 17 hingegen ist es beim dargestellten Ausführungsbeispiel so, daß eine kreisbogenförmige Kontur 22 der Blockiemase 19 das ungewollte Hochschwenken des Sägeaggregates 5 blockiert, und zwar dadurch, daß der Nocken 17 mit seiner kreisförmigen Kontur 20 an der Kontur 22 der Blockiernase 19 zur Anlage kommt. Dies erkennt man in Fig. 4.

Dreht man den Betätigungsknauf 18 um die Lagerachse 16, so wird der Nocken 17 damit gedreht und kann in seine Freigabestellung oder seine Blockierstellung gebracht werden.

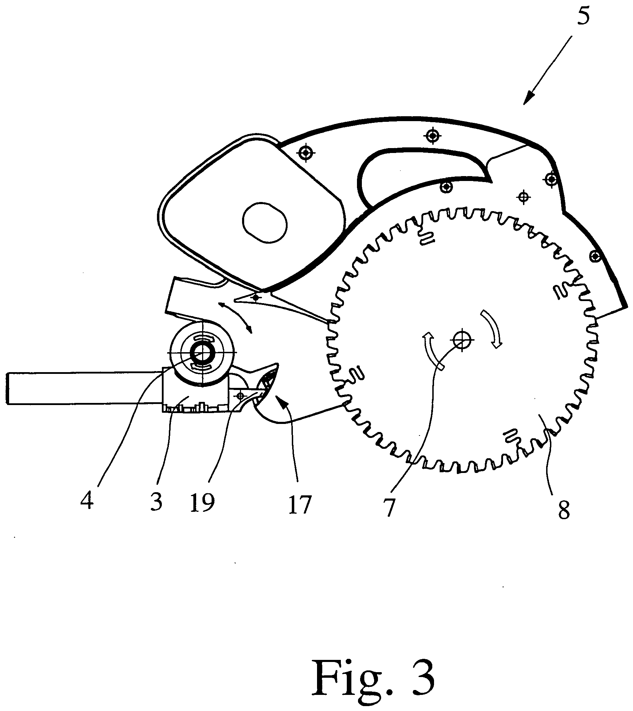

Die Darstellungen in Fig. 2 bis 4 sind hier deshalb besonders interessant, weil in diesen Darstellungen der Nocken 17 jeweils in Blockierstellung steht. Man erkennt das bereits in Fig. 2 in der Ruhestellung des Sägeaggregates 5. Durch die erfindungsgemäße, besondere Gestaltung des Nockens 17 ist es nun so, daß der so stehende Nocken 17 beim Schwenken des Sägeaggregates 5 aus der Ruhestellung (Fig. 2) in die Sägestellung bzw. in die Transportstellung (Fig. 4) durch die Blockiernase 19 zwangsweise in die Freigabestellung gedreht wird. Man erkennt das in Fig. 3. Dort trifft die Spitze der Blockiernase 19, die in die Ausnehmung 21 eingetreten ist, auf die Kante des Nockens 17. Man kann sich gut vorstellen, wie bei weiterem Absenken des Sägeaggregates 5 entsprechend den an der Querachse 4 eingezeichneten Pfeilen der Nocken 17 in Fig. 3 im Uhrzeigersinn gedreht, also gewissermaßen weggedrückt wird, so daß er an der Blockiernase 19 vorbeikommt. Letztlich drückt die Blockiernase 19 den Nocken 17 also in seine Freigabestellung.

Durch die erfindungsgemäß gewählte Konstruktion des Nockens 17 ist es möglich, daß die Blockiernase 19 in die Ausnehmung 21 eingreift und den Nocken 17 entsprechend dreht. Dadurch kann bei einem versehentlich fehlerhaft stehenden Nocken 17 keine Selbstblockierung des Sägeaggregats 5 auftreten.

Fig. 4 zeigt die Blockierstellung des Nockens 17. Hier greift der Nocken 17 mit seiner kreisförmigen Kontur 20 unter die kreisbogenförmige Kontur 22 der Blockiernase 19. Das Sägeaggregat 5 kann nicht mehr nach oben in die Ruhestellung zurückkehren.

Zweckmäßig ist es, wenn der Nocken 17 zwischen zwei Anschlägen für die Blockierstellung einerseits und für die Freigabestellung andererseits hin und her drehbar ist. Dann ist sichergestellt, daß der Nocken 17 keine Stellung einnehmen kann, in der er mit der Blockiernase 19 kollidiert. Bevorzugt sind die in der Zeichnung nicht dargestellten Anschläge als Rastungen ausgeführt. Dann hat eine Bedienungsperson ein sicheres Gefühl dafür, welche Stellung der Nocken 17 gerade einnimmt.

Das dargestellte und bevorzugte Ausführungsbeispiel zeigt eine als Aluminium-Druckgußteil ausgeführte Halterung 3, an der die Blockiernase 19 als Gußteil ausgebildet ist.

Fig. 5 der Zeichnung läßt erkennen, daß hier der Betätigungsknauf 18 flügelartig ausgestaltet ist. In der Praxis kann man den Betätigungsknauf 18 auch knebelartig bzw. mit Fingermulden ausführen, um die Betätigung besonders angenehm zu gestalten.

Aufgrund der großen Übertragungsflächen der dargestellten Gestaltung von Nocken 17 und Blockiernase 19 ist das Sägeaggregat 5 mit der Halterung 3 in Transportstellung sicher verriegelt. Die Kappsäge kann am Tragegriff 11 verläßlich getragen werden.

## Patentansprüche

1. Kappsäge mit
einem Träger (1), der eine Werkstückauflagefläche (2) bildet,
einer am Träger (1) angebrachten Halterung (3) und
einem an der Halterung (3) oberhalb des Trägers (1) angebrachten, um eine Querachse (4) aus einer angehobenen Ruhestellung in eine abgesenkte Sägestellung und umgekehrt schwenkbaren Sägeaggregat (5),
wobei das Sägeaggregat (5) in Richtung der Ruhestellung vorgespannt ist und wobei das Sägeaggregat (5) in einer abgesenkten Transportstellung, die vorzugsweise gleich tief liegt wie die tiefste Sägestellung und/oder in der ein Sägeblatt (8) des Sägeaggregates (5) mit einem Teilstück randseitig in einen Eintauschschlitz in der Werkstückauflagefläche (2) eintaucht, mittels einer Transportsicherung (15) an der Halterung (3) verriegelbar ist,
**dadurch gekennzeichnet,**
**daß** die Transportsicherung (15) einen um eine zur Querachse (4) parallele Lagerachse (16) drehbaren Nocken (17) und einen mit diesem drehfest gekuppelten Betätigungsknauf (18) sowie eine Blockiernase (19) aufweist, mit der der Nocken (17) in Transportstellung blockierend in Eingriff bringbar ist, wobei die Stellung des Nockens (17), wenn der Nocken (17) in Transportstellung blockierend in Eingriff steht, die Blockierstellung des Nockens (17) ist.

2. Kappsäge nach Anspruch 1, **dadurch gekennzeichnet,**
**daß** die Blockiernase (19) an der Halterung (3) und der Nocken (17) am Sägeaggregat (5) angeordnet ist.

3. Kappsäge nach Anspruch 1 oder 2, **dadurch gekennzeichnet,**
**daß** der Nocken (17) eine kreisförmige Kontur (20) mit einer vorzugsweise kreisabschnittförmigen Ausnehmung (21) aufweist.

4. Kappsäge nach Anspruch 3, **dadurch gekennzeichnet,**
**daß** die Blockiernase (19) eine kreisbogenförmige Kontur (22) aufweist, an der in seiner Blockierstellung der Nocken (17) mit seiner kreisförmigen Kontur (20) zur Anlage kommt.

5. Kappsäge nach einem der Ansprüche 1 bis 4, **dadurch gekennzeichnet,**
**daß** der bei in Ruhestellung des Sägeaggregates (5) in Blockierstellung stehende Nocken (17) beim Schwenken des Sägeaggregates (5) in die Sägestellung durch die Blockiernase (19) zwangsweise in eine Freigabestellung gedreht wird.

6. Kappsäge nach Anspruch 5, **dadurch gekennzeichnet,**
**daß** die Blockiernase (19) in die Ausnehmung (20) eingreift und den Nocken (17) entsprechend dreht.

7. Kappsäge nach einem der Ansprüche 1 bis 6, **dadurch gekennzeichnet,**
**daß** der Nocken (17) zwischen zwei Anschlägen für die Blockierstellung und für die Freigabestellung hin und her drehbar ist.

8. Kappsäge nach Anspruch 7, **dadurch gekennzeichnet,**
**daß** die Anschläge für die Blockierstellung und die Freigabestellung als Rastungen ausgeführt sind.

9. Kappsäge nach einem der Ansprüche 1 bis 8, **dadurch gekennzeichnet,**
**daß** die Blockiernase (19) an der Halterung (3) als Gußteil ausgebildet ist.

10. Kappsäge nach einem der Ansprüche 1 bis 9, **dadurch gekennzeichnet,**
**daß** der Betätigungsknauf (18) knebelartig oder flügelartig, vorzugsweise mit Fingermulden, ausgebildet ist.

## Claims

1. Mitre saw having
a carrier (1) which forms a workpiece support surface (2),
a mount (3) attached to the carrier (1), and
a saw unit (5) which is attached to the mount (3) above the carrier (1) and is pivotable about a transverse axis (4) from a raised rest position into a lowered sawing position and vice versa,
wherein the saw unit (5) is preloaded in the direction of the rest position, and
wherein the saw unit (5) is able to be locked in a lowered transport position, which is preferably located as low as the lowest sawing position and/or in which part of a saw blade (8) of the saw unit (5) plunges peripherally into a plunge slot in the workpiece support surface (2), by means of a transport securing means (15) on the mount (3),
**characterized in that**
the transport securing means (15) has a cam (17) that is rotatable about a bearing axis (16) parallel to the transverse axis (4) and an actuating knob (18) coupled thereto for conjoint rotation, and also a blocking nose (19) with which the cam (17) is able to be brought into blocking engagement in the transport position, wherein the position of the cam (17) in which the cam (17) is in blocking engagement in the transport position is the blocking position of the cam (17).

2. Mitre saw according to Claim 1, **characterized in that** the blocking nose (19) is arranged on the mount (3) and the cam (17) is arranged on the saw unit (5).

3. Mitre saw according to Claim 1 or 2, **characterized in that** the cam (17) has a circular contour (20) with a recess (21) preferably in the form of a circular segment.

4. Mitre saw according to Claim 3, **characterized**
**in that** the blocking nose (19) has a contour (22) in the form of a circular arc, against which the cam (17) comes into abutment with its circular contour (20) in its blocking position.

5. Mitre saw according to one of Claims 1 to 4, **characterized**
**in that** the cam (17), which is in the blocking position in the rest position of the saw unit (5), is forcibly rotated into a releasing position by the blocking nose (19) when the saw unit (5) is pivoted into the sawing position.

6. Mitre saw according to Claim 5, **characterized**
**in that** the blocking nose (19) engages in the recess (20) and accordingly rotates the cam (17).

7. Mitre saw according to one of Claims 1 to 6, **characterized**
**in that** the cam (17) is rotatable back and forth between two stops for the blocking position and for the releasing position.

8. Mitre saw according to Claim 7, **characterized**
**in that** the stops for the blocking position and the releasing position are embodied as catches.

9. Mitre saw according to one of Claims 1 to 8, **characterized**
**in that** the blocking nose (19) on the mount (3) is configured as a cast part.

10. Mitre saw according to one of Claims 1 to 9, **characterized**
**in that** the actuating knob (18) is configured in a toggle-like or wing-like manner, preferably with finger depressions.

## Revendications

1. Scie à onglet avec
un support (1), qui forme une surface d'appui (2) pour une pièce à travailler, une fixation (3) montée sur le support (1), et
un agrégat de sciage (5), monté au-dessus du support (1), qui est pivotant autour d'un axe transversal (4), hors d'une position de repos relevée vers une position abaissée de sciage et inversement,
dans lequel l'agrégat de sciage (5) est soumis à une précontrainte en direction de la position de repos et dans lequel l'agrégat de sciage (5) peut être verrouillé sur un élément de maintien (3), au moyen d'un dispositif de sécurité pour le transport (15), dans sa position de transport abaissée, qui est de préférence aussi profonde que la position de sciage la plus basse et/ou dans laquelle la lame de scie (8) de l'agrégat de sciage (5) plonge avec une pièce partielle en bordure dans une fente d'escamotage ménagée dans la surface d'appui (2), **caractérisée en ce que**,
le dispositif de sécurité pour le transport (15) comporte une came (17) rotative autour d'un axe de stockage (16), parallèle à l'axe transversal (4) et un bouton de commande (18) qui est couplé de manière rigide avec lui, ainsi qu'un nez de blocage (19), avec lequel la came (17) peut être amenée en prise pour assurer la position bloquée de transport, dans lequel la position de la came (17) est la position de blocage de la came (17) lorsque la came (17) est dans la position active pour le transport.

2. Scie à onglet selon la revendication 1, **caractérisée en ce que**,
le nez de blocage (19) est ménagé sur la fixation (3) et la came (17) est disposé sur l'agrégat de sciage (5).

3. Scie à onglet selon la revendication 1 ou 2, **caractérisée en ce que**,
la came (17) a un contour circulaire (20) avec un évidement (21) de préférence en forme de secteur circulaire.

4. Scie à onglet selon la revendication 3, **caractérisée en ce que**,
le nez de blocage (19) présente un contour (22) en forme de secteur circulaire, dans lequel la came (17), dans sa position de blocage, est en appui par son contour (20) de forme circulaire.

5. Scie à onglet selon l'une des revendications 1 à 4, **caractérisée en ce que**,
avec l'agrégat de sciage (5) en position de repos, la came (17) se trouvant dans la position de blocage, le pivotement de l'agrégat de sciage (5) dans la position de sciage par le nez de blocage (19), le place de force dans la position de sciage, dans une position libre.

6. Scie à onglet selon la revendication 5, **caractérisée en ce que**,
le nez de blocage (19) s'engage dans l'évidement (20) et la came (17) tourne de façon correspondante.

7. Scie à onglet selon l'une des revendications 1 à 6, **caractérisée en ce que**,
la came (17) est agencée pour se tourner en va et vient entre deux butées pour la position de blocage et pour la position libre.

8. Scie à onglet selon la revendication 7, **caractérisée en ce que**,
les butées pour les positions de blocage et libre sont réalisées sous la forme d'encoches.

9. Scie à onglet selon l'une des revendications 1 à 8, **caractérisée en ce que**,
le nez de blocage (19) est constitué d'une pièce en fonte solidaire de la fixation (3).

10. Scie à onglet selon l'une des revendications 1 à 9, **caractérisée en ce que**,
le bouton d'actionnement (18) est réalisé sous forme de languette ou d'ailette, de préférence avec empreinte de doigts.
